# EUROPEAN PATENT APPLICATION

(11) **EP 0 624 745 A1**
(43) Date of publication of application: **17.11.1994**
(21) Application number: 94105479.3
(22) Date of filing: 08.04.1994
(51) Int. Cl.: F16K 15/18

(54) **Relief valve**

(30) Priority: 13.04.1993 JP 86214/93
(71) Applicant: Sumitomo Electric Industries, Ltd., Osaka 541 (JP)
(72) Inventor: Segawa, Taro, c/o Itami Works of Sumitomo, Itami-shi, Hyogo (JP)
(74) Representative: Herrmann-Trentepohl, Werner, Dipl.-Ing.

(57) **Abstract**

In a relief valve, direction of action of operating fluid pressure on a valve body (38) is the same as direction of biasing of a spring (40) forcing the valve body (38) to a valve closing direction, and the relief valve includes means (14) for moving, when the pressure of the operating fluid exceeds a prescribed value, the valve body to a valve opening direction against the pressure of the fluid and against the force of the spring. Since the direction of action of the operating fluid is opposite to the direction of valve opening direction, a highly reliable relief valve can be provided.

## Description

### BACKGROUND OF THE INVENTION

### Field of the Invention

The present invention relates to a relief valve and, more particularly, to an improvement of a structure of a relief valve providing improved performance.

### Description of the Background Art

A structure of a conventional relief valve will be described with reference to the figures.

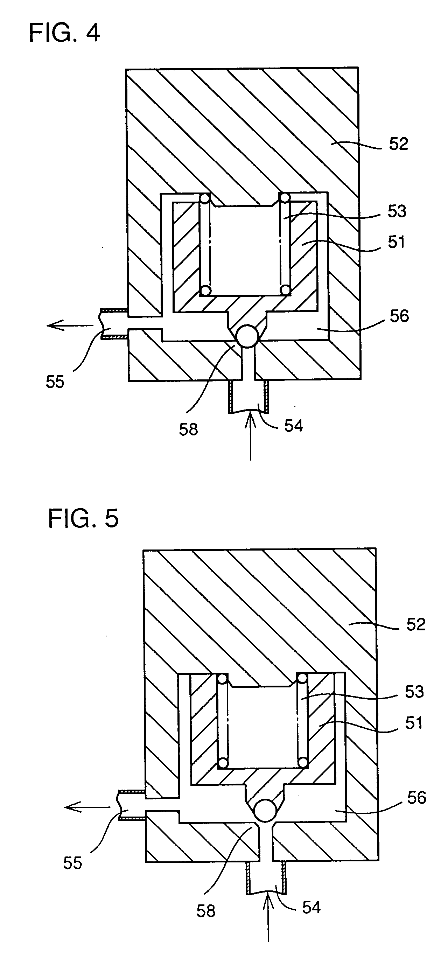

Fig. 4 is a cross section showing a structure of a conventional relief valve.

Referring to Fig. 4, the relief valve has a housing 52 serving as a body. Housing 52 is provided with an inlet port 54 through which operating fluid is introduced and an outlet port 55 through which operating fluid is discharged, at prescribed positions.

In housing 52, there is formed a chamber 56 through which the operating fluid which has been introduced through inlet port 54 flows to outlet port 55.

In chamber 56, a movable valve body 51 is forced against a valve sheet 58 by means of a pressure adjusting spring 53.

Normally, when the fluid is not operating, movable valve body 51 is forced against valve sheet 58 by the force of pressure adjusting spring 53, and therefore the relief valve is closed.

Referring to Fig. 5, when operating fluid is introduced with a prescribed pressure through inlet port 54, movable valve body 51 moves in the direction of flow of the operating fluid against the force of pressure adjusting spring 53.

Thus, the relief valve is opened.

However, in the relief valve having the above described structure, the direction of movement of the movable valve body 51 opening the relief valve is the same as the direction of action of the operating fluid.

Accordingly, in ordinary use, the force acting on movable body 51 by the operating fluid is always in the same direction as the opening direction of the movable valve body, so that the valve is not always closed as desired. Sometimes the valve is opened undesirably even when the pressure of the operating fluid is lower than the prescribed set value.

### SUMMARY OF THE INVENTION

An object of the present invention is to provide a relief valve of superior performance which can prevent leakage of operating fluid, by setting the direction of force applied by the operating fluid identical with the direction of closing of the valve.

The above described object is attained by a relief valve in accordance with one aspect of the present invention which opens when internal fluid exceeds a prescribed pressure, in which the direction of pressure of the operating fluid acting on the valve body is the same as the direction of biasing force of a spring forcing the valve body to a closing direction, and which includes means for moving the valve body to an opening direction against the pressure of the operating fluid and against the biasing force of the spring, when the pressure of the operating fluid exceeds a prescribed value.

According to another aspect, the relief valve of the present invention includes a housing containing therein a fluid passage with an inlet port and an outlet port; a movable valve sheet placed in the fluid passage; a movable valve body placed in the fluid passage between the inlet port and the movable valve sheet and operating with the movable valve sheet to open and close the fluid passage; first forcing means forcing the movable valve sheet to a valve closing direction; a second forcing means forcing the movable valve body to the valve closing direction; and a valve opening means for opening, when the pressure of the fluid introduced through the inlet port exceeds a prescribed value and the movable valve sheet moves against the force of the first forcing means, by abutting the movable valve of body so as to separate the movable valve body from the movable valve sheet.

Preferably, the movable valve sheet includes a chamber therein, the valve sheet is provided at a position of the chamber facing the fluid passage, and the movable valve body and the second forcing means are contained in the chamber.

More preferably, the valve opening means includes a shaft fixed on the housing and extending in the movable valve sheet.

In this relief valve, when the pressure of the operating fluid is not higher than a prescribed pressure, the movable valve body is forced against the movable valve sheet because of the action of the fluid pressure, and therefore closed state is maintained. If the pressure of the operating fluid exceeds a prescribed value, the movable valve body abuts the valve opening means, force, which is in the opposite direction to the direction of action of the fluid, is applied to the movable valve body, and thus the movable valve body and the movable valve sheet are separated from each other and the valve is opened.

Therefore, while the pressure of the operating fluid is not higher than the prescribed pressure, force in the valve closing direction is applied constantly, and therefore the valve is not opened.

The foregoing and other objects, features, aspects and advantages of the present invention will become more apparent from the following detailed description of the present invention when taken in conjunction with the accompanying drawings.

### BRIEF DESCRIPTION OF THE DRAWINGS

Fig. 1 is a cross section showing a structure and a first state of a relief valve in accordance with the present invention.

Fig. 2 is a cross section showing a second state of the relief valve in accordance with the present invention.

Fig. 3 is a cross section showing a third state of the relief valve in accordance with the present invention.

Fig. 4 is a cross section showing a structure and the first state of a conventional relief valve.

Fig. 5 is a cross section showing a second state of the conventional relief valve.

### DESCRIPTION OF THE PREFERRED EMBODIMENTS

The structure of the relief valve in accordance with the present invention will be described with reference to the figures.

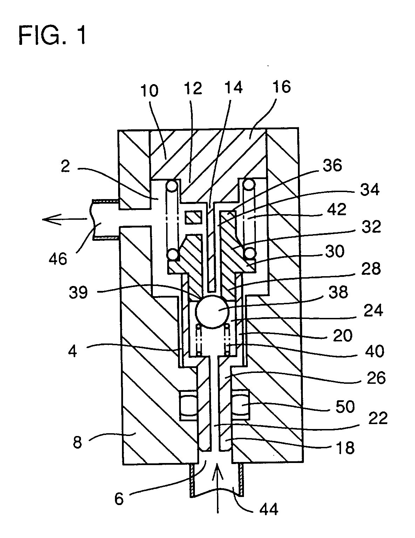

Fig. 1 is a cross section showing the structure of the relief valve in accordance with one embodiment.

Referring to Fig. 1, the relief valve includes a housing 8 as a body. Housing 8 is provided with an inlet port 44 through which operating fluid is introduced and an outlet port 46 through which operating fluid is discharged, at prescribed positions.

In housing 8, there is provided a passage for guiding the operating fluid introduced through inlet port 44 to outlet port 46. The passage includes a first passage 2 having a prescribed inner diameter, and a second passage 4 continuous to and coaxially with the first passage 2 and having an inner diameter smaller than the diameter of the first passage 2. Further, the passage includes a third passage 6 continuous to and coaxially with the second passage 4 and having an inner diameter smaller than that of the second passage 4.

A plug 16 is fit in the first passage 2. Plug 16 includes a first shaft portion 10 having an outer diameter which is the same as the inner diameter of the first passage 2, a second shaft portion 12 continuous to and coaxially with the first shaft portion 10 and having an outer diameter smaller than that of the first shaft portion 10, and a third shaft portion 14 continuous to and coaxially with the second shaft portion 12 and having an outer diameter smaller than that of the second shaft portion 12.

A first movable valve sheet 26 is positioned in the third passage 6 and the second passage 4. The first movable valve sheet includes a fourth shaft portion 18 having an outer diameter which is slightly smaller than the inner diameter of the third passage 6; a fifth shaft portion 20 provided coaxially with the fourth shaft portion 18 and having an outer diameter larger than that of the fourth shaft portion 18 but smaller than the inner diameter of the second passage 4; a fourth passage 22 provided in the fourth shaft portion 18 and having a prescribed diameter; and a fifth passage 24 provided in the fifth shaft portion 20 and continuous to the fourth passage 22 and having an inner diameter larger than the inner diameter of the fourth passage 22.

A second movable valve sheet 36 is fit in fifth passage 24. The second movable valve sheet 36 includes a sixth shaft portion 28 having an outer diameter which is the same as the inner diameter of the fifth passage 24; a seventh shaft portion 30 provided coaxially with and continuous to the sixth portion 28 and having an outer diameter larger than the outer diameter of the sixth shaft portion 28; and an eighth shaft portion 32 provided continuous to and coaxially with the seventh shaft portion 30 and having an outer diameter smaller than the outer diameter of the seventh shaft portion 30 but approximately the same as the outer diameter of the second shaft portion 12. Further, it includes a sixth passage 34 provided facing through the sixth shaft portion 28, seventh shaft portion 30 and the eight shaft portion 32, and having an inner diameter which is larger than the outer diameter of the third shaft portion 14.

A valve body 38 is forced by biasing springs 40 to the side of the valve sheet 39 of the second movable valve sheet 36 so as to close the valve sheet. Pressure adjusting springs 42 are placed in the second shaft portion 12 and the eight shaft portion 32 against the pressure of the operating fluid introduced through inlet port 44. In the sixth passage 34 of the second movable valve sheet 36, a third shaft portion 14 is inserted.

The first movable valve sheet 26 and the second movable sheet 36 are movable in the axial direction, and a sealing member 50 is provided at a sliding surface between the fourth shaft portion 18 and the third passage 6. In the relief valve having the above described structure, in the normal state (when the fluid is not operating), the valve body 38 is forced against valve sheet 39 by biasing spring 40, and therefore the valve is kept closed.

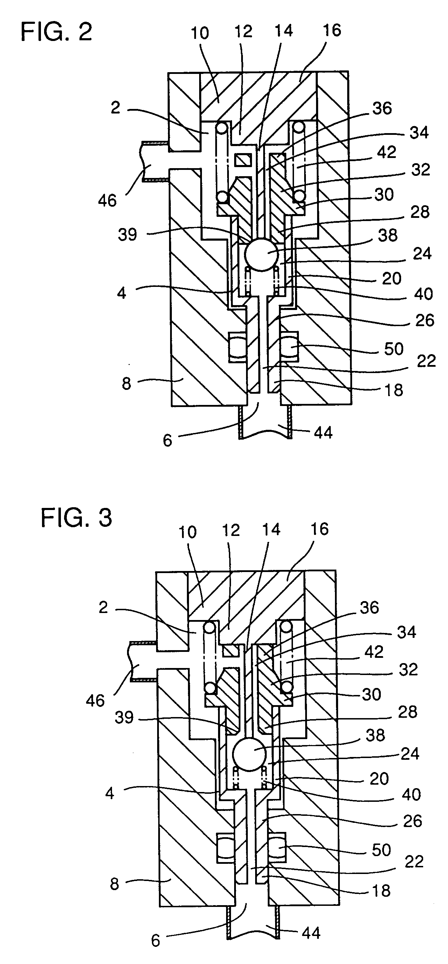

The operation of the relief valve when the pressure of the operating fluid is exerted on the valve will be described with reference to Figs. 2 and 3.

First, referring to Fig. 2, when an operating fluid of a prescribed pressure is introduced through inlet port 44, valve body 38 moves in the direction of action of the operating fluid together with the first movable valve sheet 26 and the second movable valve sheet 36 while being in contact with the valve sheet 39.

When the valve body 38 moves by a prescribed amount, valve body 38 comes to be in contact with the third shaft portion 14.

When the operating fluid further continues to operate, referring to Fig. 3, movement of valve body 38 in the direction of action of the fluid is prevented by the third shaft portion 14, while the first movable valve sheet 26 and the second movable valve sheet 36 move continuously. Consequently, valve body 38 is separated from valve sheet 39, and the relief valve is opened.

As described above, in the present embodiment, the direction of action of the fluid pressure is the same as the direction of movement of the valve body to close the valve. Therefore, when the pressure of the operating fluid is not higher than a prescribed pressure, the valve body is always in contact with the valve sheet, keeping the valve closed, ensuring valve closing operation. Accordingly, leakage of the operating fluid when the pressure of the operating fluid is low can be prevented, thus providing a highly reliable relief valve.

As described above, in the relief valve of the present invention, the direction of action of the operating fluid is the same as the direction of movement of the valve body to close the valve.

As a result, if the pressure of the operating fluid is not higher than the prescribed pressure, the pressure of the operating fluid acts on the movable valve body and the valve body is forced to the movable valve sheet, whereby the valve is kept closed. When the pressure of the operating fluid exceeds the prescribed value, the movable valve body abuts the valve opening means, a force in the opposite direction to the action of the operating fluid is applied to the movable valve body, so that the movable valve body is separated from the movable valve sheet, opening the valve. Accordingly, the valve never opens if the pressure is lower than the prescribed pressure, and thus a highly reliable relief valve can be provided.

Although the present invention has been described and illustrated in detail, it is clearly understood that the same is by way of illustration and example only and is not to be taken by way of limitation, the spirit and scope of the present invention being limited only by the terms of the appended claims.

## Claims

1. A relief valve which opens when pressure of inner fluid exceeds a prescribed pressure, wherein
direction of action of operating fluid pressure on a valve body (38) is the same as direction of biasing of a spring (40) forcing said valve body (38) to a valve closing direction, said relief valve comprising
means (14) for moving, when the pressure of said operating fluid exceeds the prescribed pressure, said valve body (38) to a valve opening direction against biasing force of said spring and against said pressure of the operating fluid.

2. A relief valve, comprising;
a housing including therein a fluid passage (2, 4, 6) with an inlet port (44) and an outlet port (46);
a movable valve sheet (26, 36) placed in said fluid passage (2, 4, 6);
a movable valve body (38) placed in the fluid passage between said inlet port (44) and said movable valve sheet (26, 36) for opening and closing passage in cooperation with said movable valve sheet (26, 36);
first forcing means (42) for forcing said movable valve sheet (26, 36) to a valve closing direction;
a second forcing means (40) for forcing said movable valve body (38) to a valve closing direction; and
valve opening means (14) for opening the valve, when pressure of fluid introduced through said inlet port (44) exceeds a prescribed value and said movable valve sheet (26, 36) moves against force of said first forcing means (42), by abutting said movable valve body (38) for separating said movable valve body (38) from said movable valve sheet (26, 36).

3. The relief valve according to claim 2, wherein
said movable valve sheet (26, 36) includes a chamber (24) therein, a valve sheet (39) is provided at a position of the chamber (24) facing said fluid passage (2, 4, 6,) and said movable valve body (38) and said second forcing means (40) are contained in the chamber (24, 36).

4. The relief valve according to claim 3, wherein
said valve opening means (14) includes a shaft (14) fixed at said housing (8) and extending in said movable valve sheet (26, 36).
